# EUROPEAN PATENT APPLICATION

(11) **EP 1 541 403 A2**
(43) Date of publication of application: **15.06.2005**
(21) Application number: 04028842.5
(22) Date of filing: 06.12.2004
(51) Int. Cl.: B60K 15/04

(54) **Filler tube with mechanical seal for refueling nozzle and with failed nozzle relief**

(30) Priority: 10.12.2003 US 732055
(71) Applicant: EATON CORPORATION, Cleveland, Ohio 44114-2584 (US)
(72) Inventor: Allman, Craig H., Ypsilanti, Michigan 48197 (US); Spink, Kenneth M., Jerome, Michigan 49249-9517 (US); Benjey, Robert P., Dexter, Michigan 48130-9311 (US)
(74) Representative: Patentanwälte Rüger, Barthelt & Abel

(57) **Abstract**

A fuel tank filler tube has a seal disposed therein for sealing about a refueling nozzle upon insertion in the tube. When the tank is filled and fuel backs up in the filler tube, in the event of failure of the automatic nozzle shutoff, an annular pressure relief valve surrounding the seal opens and provides for by-pass flow around the seal to the upper end of the filler tube. The annular valve includes a rigid ring member with an annular flexible seal attached and is spring biased to the normally closed position.

## Description

### BACKGROUND OF THE INVENTION

The present invention relates to the filler tube for refueling a motor vehicle fuel tank of the type having a mechanical seal in the filler tube for sealing about a refueling nozzle upon insertion of the nozzle into the filler tube. Recent mandated limits on fuel vapor emission during refueling have required that the filler tube incorporate a seal to seal about the filler nozzle in a manner to prevent fuel vapor escaping to the atmosphere about the nozzle.

Current refueling nozzles incorporate an automatic shutoff feature for the nozzle to sense backup of the liquid fuel in the filler tube when the tank is full. However, if upon insertion, the nozzle is sealed in the filler tube and the nozzle shutoff fails to actuate, continued discharge of liquid fuel into the tank can create a positive pressure in the tank and result in rupture of either the tank or its attachments and conduits connected to the tank.

Accordingly, it has been desired to provide a way or means of bypassing the mechanical seal about the nozzle in the event of failure of the automatic nozzle shutoff during refueling.

Heretofore, fuel tank filler tube systems have employed an external bypass tube attached to the upper end of the filler tube with a one-way valve therein to provide a pressure relief and bypass around the mechanical nozzle seal. However, this arrangement has proven to be costly to manufacture in high volume production and has required provision for additional space around the filler tube within the vehicle body structure to accommodate the bypass tube. According, it has been desired to provide a way or means of effecting a bypass for a refueling nozzle seal in a tank filler tube in a manner which does not require additional cost or space upon installation.

### BRIEF SUMMARY OF THE INVENTION

The present invention provides a pressure relief valve in a fuel tank filler tube of the type having a mechanical seal for sealing about the refueling nozzle upon insertion of the nozzle in the filler neck. The pressure relief valve of the present invention is disposed annularly about the mechanical nozzle seal and opens upon backup of liquid fuel into the filler neck in the event of failure of the automatic nozzle shutoff. Upon opening of the annular relief valve, fuel is permitted to flow around the nozzle seal and to discharge through the open end of the filler neck about the nozzle. In the presently preferred practice, the relief valve includes an annular valve member of having an annular flexible seal disposed thereon. The flexible seal may be mechanically attached to the valve member or may be molded thereon.

### BRIEF DESCRIPTION OF THE DRAWINGS

FIG. 1 is a cross-section of the upper end of a fuel tank filler tube with the invention installed thereon; and,

FIG. 2 is an exploded view of the components of FIG. 1 without the filler tube.

### DETAILED DESCRIPTION OF THE INVENTION

Referring to the drawings, an assembly of the invention in the upper end of a fuel tank filler tube is indicated generally at 10 and includes a filler tube 12 having an enlarged diameter portion 14 terminating at a proximal end in an outwardly extending flange 16 and having a retaining cup 18 for a filler tube cap (not shown) disposed on flange 16 by a corresponding outwardly extending flange 20 formed on the cup 18. It will be understood that the lower or distal end of tube 12 (not shown) is adapted for connection to a fuel tank.

An annular insert 22 is received in the portion 14 of the filler tube; and, the insert 22 also has an outwardly extending flange 24 which is sandwiched between the flanges 16, 20 and is secured therein by any suitable expedient as, for example, weldment of cup 18, insert 22 and the tube 12 to form a subassembly.

The insert 22 has an annular shoulder or offset portion 26 which is provided with at least one and preferably a plurality of circumferentially spaced apertures or openings 28 for providing bypass flow as will hereinafter be described in greater detail.

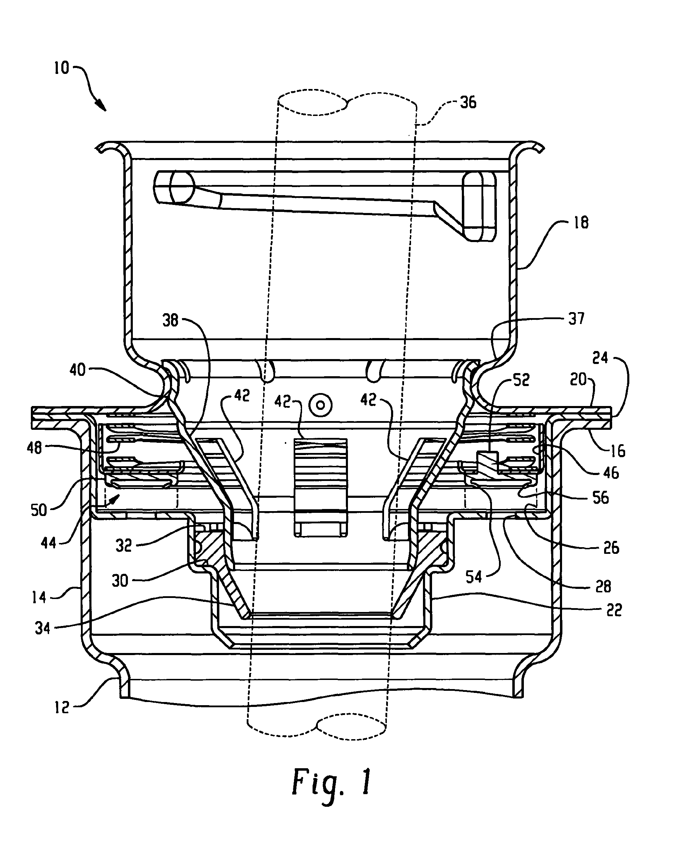

The insert 22 has another shoulder or annular flange 30 formed therein below or downstream of the shoulder 26; and, the shoulder 30 has disposed thereon an annular bead portion 32 of an annular lip seal 34 which is formed integrally with the bead 32 and extends downwardly therefrom tapering radially inwardly. The lip seal 34 is sized so as to seal about the outer periphery of a refueling nozzle upon insertion of a nozzle in the filler tube as shown in dashed outline in FIG. 1 and denoted by reference numeral 36.

A seal retaining collar or tubular insert 38 is disposed within the cup 18 and is tapered and configured to seal against the bead ring 32 of the tapered seal 34 thus retaining the seal compressed between insert 22 and the outer periphery of the insert 38 in addition to maintaining sealing contact of the bead ring 32 against the annular shoulder 30.

The insert 38 may be retained in the cup 18 by any suitable expedient as, for example, deformation of the material and forming a convolution 40 thereon and by flaring the upper rim of the insert 38 outwardly over a correspondingly located inwardly extending convolution 37 formed in cup 18 or alternatively by weldment. Insert 38 has a plurality of slots or apertures 42 formed therein in the region above the seal 34 to provide bypass flow.

Disposed within the tube upper section 14 and in the region thereof between the flange 20 and the shoulder 26 is a one-way or pressure relief valve denoted generally at 44 which includes an annular support ring 46 which is moveable in the axial direction with respect to the tube 12 and which is biased downwardly, or in a direction toward the shoulder 26, by a suitable spring arrangement 48 which may comprise a plurality of wave springs in series or other spring arrangement such as a coil spring. In the present practice of the invention, ring 46 is formed of metal; however, other suitable materials such as rigid plastic including glass filled polyamide may be used.

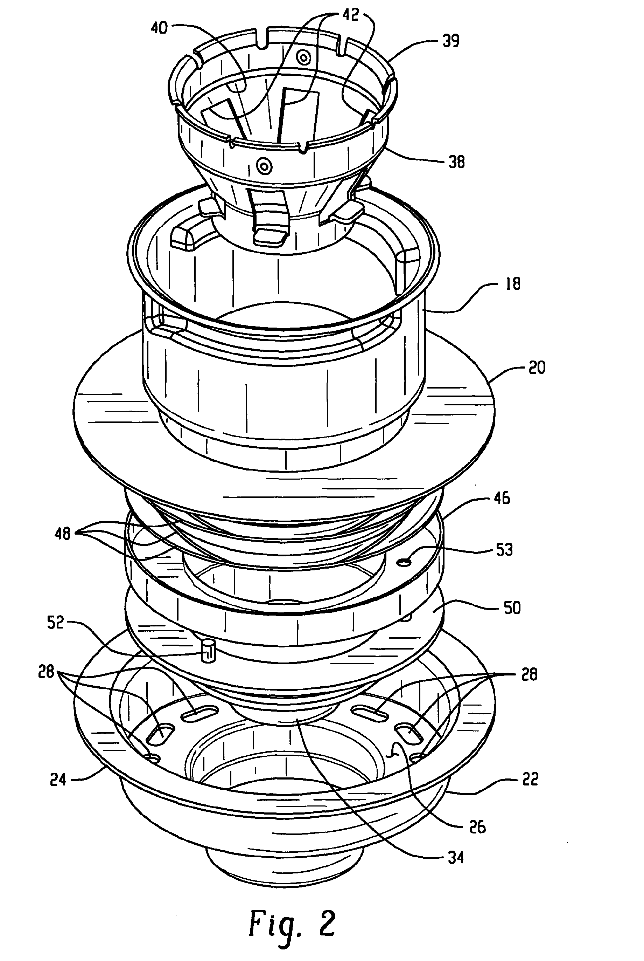

Ring member 46 has an annular flexible seal member 50 disposed thereon and secured thereto in the embodiment illustrated in FIGS. 1 and 2, mechanically by a plurality of tabs 52 disposed circumferentially thereabout which are each pulled through an aperture 53 correspondingly located in ring 46. The annular seal member 50 preferably has a plurality of annular radially spaced lip surfaces 54, 56 which straddle at least one aperture 28 for sealing thereover. In an alternative arrangement the flexible seal 50 may be molded over ring 46, as for example by insert molding. In the presently preferred practice the seal member 50 is formed of elastomeric material; however, other suitable materials including plasticized resin may be used.

It will be understood that in FIG. 1 the position of the valve 44 is shown in the open position in solid outline and in closed position in dashed outline. Thus, with the refueling nozzle 36 inserted in the seal 34, liquid fuel rising into the space between insert 22 and the filler tube 14 will permit flow of liquid through the at least one aperture 28 and through slots 42 around the nozzle and outwardly through the upper end of the cap retaining portion 18. It will be understood that normally the valve 44 would be in the closed position with the fuel lips 54, 56 sealed against the upper surface of shoulder 26. The present invention thus provides a simple low cost and compact way of providing a bypass valve in a fuel tank filler neck of the type having a seal about a refueling nozzle inserted therein to permit liquid fuel to escape therefrom in the event of failure of the nozzle to shut off.

Although the invention has hereinabove been described with respect to the illustrated embodiments, it will be understood that the invention is capable of modification and variation and is limited only by the following claims.

## Claims

1. A fuel tank filler tube assembly comprising:
(a) a tube with an enlarged diameter portion (14) at a proximal end thereof and a distal end adapted for fluid connection to a fuel tank;
(b) an annular seal (32) disposed in said proximal end and adapted for sealing about the outer periphery of a refueling nozzle upon insertion therein; and,
(c) an annular relief valve (44) disposed about said seal and operable to permit fuel to bypass said seal upon fuel back-up in the filler tube during refueling and failure of a refueling nozzle to shut off.

2. The filler tube assembly defined in claim 1, further comprising a vapor recirculation port in the wall of the tube downstream of the annular seal.

3. The filler tube assembly defined in claim 2, wherein said port has one end of a vapor recirculation tube attached thereto.

4. The filler tube assembly defined in claim 1, wherein said relief valve includes an annular elastomeric seal member (50) disposed concentrically with respect to said annular seal.

5. The filler tube assembly defined in claim 1, wherein said relief valve includes an annular valve member (44) moveable in an axial direction with respect to the tube.

6. The filler tube assembly defined in claim 1, wherein said relief valve includes an annular moveable valve member biased to a closed position with a coil (48) spring.

7. The filler tube assembly defined in claim 7, wherein said relief valve includes a rigid annular moveable member (46) with an annular flexible seal (50) attached thereto and moveable therewith.

8. The filler tube assembly defined in claim 7, wherein said flexible seal is formed by insert molding.

9. The filler tube assembly defined in claim 7, wherein said flexible seal is formed of elastomeric material.

10. The filler tube assembly defined in claim 1, further comprising a one-way valve disposed in said tube for closing said nozzle seal upon withdrawal of the nozzle.

11. A method of making a fuel tank filler tube assembly comprising:
(a) forming an enlarged diameter portion at a proximal end of a tube;
(b) disposing an annular refueling nozzle seal in said enlarged diameter portion; and,
(c) disposing an annular relief valve about said nozzle seal in said enlarged portion and by-passing the nozzle seal.

12. The method defined in claim 11, further comprising the step of disposing a one-way valve in said tube and closing said nozzle seal upon withdrawal of the nozzle.

13. The method defined in claim 11, wherein said step of disposing an annular relief valve includes disposing a rigid moveable valve member with a flexible annular seal.

14. The method defined in claim 13, wherein said step of disposing a relief valve includes insert molding said flexible annular seal on said rigid valve member.

15. The method defined in claim 13, wherein said step of disposing flexible seal includes forming a seal of elastomeric material.
